# EUROPÄISCHE PATENTSCHRIFT

(11) **EP 2 986 872 B1**
(45) Veröffentlichungstag und Bekanntmachung des Hinweises auf die Patenterteilung: **21.06.2017**
(21) Anmeldenummer: 14705992.7
(22) Anmeldetag: 11.02.2014
(51) Int. Cl.: F16J 15/52, F16J 3/04

(54) **DICHTUNGSMANSCHETTE FÜR EINE DREHGELENKKUPPLUNG**
SEALING SLEEVE FOR A ROTARY JOINT COUPLING
GARNITURE D'ÉTANCHÉITÉ POUR ACCOUPLEMENTS ARTICULÉS ROTATIFS

(30) Priorität: 19.04.2013 DE 102013103977
(43) Veröffentlichungstag der Anmeldung: 24.02.2016
(73) Patentinhaber: ContiTech Vibration Control GmbH, 30165 Hannover (DE)
(72) Erfinder: HERMANSKI, Uwe, 29499 Zernien (DE)
(74) Vertreter: Kilsch, Armin Ralph
(86) Internationale Anmeldenummer: PCT/EP2014/052570
(87) Internationale Veröffentlichungsnummer: WO 2014/170042

(56) Entgegenhaltungen:
- WO-A2-2008/037874
- DE-A1-102007 015 073
- US-A1- 2008 070 706
- US-A1- 2012 309 547
- US-B1- 6 179 717

## Beschreibung

Die Erfindung betrifft eine Dichtungsmanschette in Form eines hub- und winkelbeweglichen Rollbalg zur Abdichtung von Drehgelenkkupplungen rotierender Wellen, insbesondere Kardanwellen, wobei die Dichtungsmanschette mit ihrem im Durchmesser größeren Ende mit dem Gelenkaußenteil und mit dem im Durchmesser kleineren Ende mit der Welle dichtend verbunden ist.

Solche Dichtmanschetten an einer Drehgelenkkupplung, d.h. an einem rotierende Antriebsgelenk, müssen einerseits die Fettfüllung im Gelenk halten, andererseits das Eindringen von Schmutz in das Gelenk verhindern und ebenfalls Volumenveränderungen des von den oder der Dichtmanschette eingeschlossenen Raums schadlos überstehen. Hierbei muss die Dichtmanschette diese Aufgaben auch bei Winkelstellungen der Drehgelenkkupplung, d. h. bei einer Winkelstellung zwischen der Welle und dem Gelenkaußenteils sicher auch dann erfüllen, wenn die Dichtmanschette durch Rotieren der Drehgelenkkupplung eine schnell wechselnde, umlaufend oszillierende Walkbewegung erfährt. Bei einer Drehgelenkkupplung etwa in einer Kardanwelle eines PKW können dabei hohe Drehzahlen, relativ große Winkelstellungen und damit eine starke Biegewechselspannung für die Dichtmanschette entstehen.

Die WO 01/88399 A1 offenbart eine Dichtmanschette in Forme eines Rollbalgs zur Abdichtung eines Drehgelenks, mit einem ersten Bund mit einem größeren Durchmesser zur Festlegung auf einem Gelenkaußenteil und einem zweiten Bund mit einem kleineren Durchmesser zur Festlegung auf einem Gelenkinnenteil bzw. einer damit verbundenen Welle. Der Rollbalg weist eine teilweise doppelte die Bunde verbindenden Wandung auf.

Dadurch wird zwar der Einfluss der Biegewechselspannung bei hohen Drehzahlen und großen Winkelstellungen gering gehalten, eine besondere Dichtigkeit oder Volumentoleranz ist jedoch nicht ausgeprägt.

Die DE 10 2004 034772 Aloffenbart eine Dichtmanschette nach Art eines Rollbalgs, bei der der zwischen dem größeren Bund und dem kleineren Bund liegende Wandabschnitt zumindest eine axial offene Ringfalte bildet mit umfangsverteilten Einteilungen in der konvexen Wölbung. Dies dient zwar der besseren Entformbarkeit bei der Herstellung, führt aber nicht zu besonders verbesserten Eigenschaften im Hinblick auf die Dichtung. Eine ähnliche Dichtungsmanschette ist auch aus WO 2008/037874 A bekannt. Für die Erfindung bestand die Aufgabe, eine einfach herzustellende Dichtmanschette für eine Drehgelenkkupplung bereitzustellen, bei der trotz einer schnell wechselnden, umlaufend oszillierenden Walkbewegung eine erhöhte Dichtigkeit gegen aus der Drehgelenkkupplung austretendes Fett und eine sicher Abdichtung gegen eindringenden Schmutz erreicht wird.

Gelöst wird diese Aufgabe durch die Merkmale des Hauptanspruchs. Weitere vorteilhafte Ausbildungen sind in den Unteransprüchen offenbart.

Dabei weist die Dichtungsmanschette an dem im Durchmesser kleineren Ende und ausgehend von diesem Ende folgende Einrichtungen auf:
- eine am Wellenumfang anliegende Lippendichtung,
- einen sich an die Lippendichtung kupplungsseitig anschließenden, an der Welle anliegenden ersten Abschnitt, der mit über den Innenumfang verteilt angeordneten und zur Welle geöffneten Innen-Nuten versehen ist, sowie
- eine sich an den ersten Abschnitt kupplungsseitig anschließenden zweiten Abschnitt, der an seinem Innenumfang umlaufende und zur Welle ausgerichtete sägezahnförmige Vorsprünge oder Rippen aufweist, deren Spitzen an der Wellenaußenseite anliegen.

Eine solche erfindungsgemäße Ausbildung führt dazu, dass einerseits durch die über den Innenumfang verteilt angeordneten Innen-Nuten oder "Rillen" eine sicher Be- und Entlüftung der von der Dichtmanschette gekapselten Drehgelenkkupplung erfolgt, trotz der im Regelfall engen Anlage des ersten Abschnitts auf der Welle Die axial verlaufenden Rillen, gewährleisten auch bei Winkligkeit und durch die Walkbewegung bzw. Hubbewegung der Manschette erzeugte Volumenveränderung der gekapselten Bereiche, dass Luft austreten kann, während gleichzeitig die umlaufende Dichtlippe das Eindringen von Schmutz und Feuchtigkeit sicher verhindert. Darüber hinaus wird durch den zweiten Abschnitt, der an seinem Innenumfang umlaufende und zur Welle ausgerichtete sägezahnförmige Vorsprünge oder Rippen aufweist, deren Spitzen an der Wellenaußenseite anliegen eine Labyrinth-Dichtung bereitgestellt, die das Austreten von Fett aus den gekapselten Bereichen verhindert, so dass auch bei durch die Hub- und Rotationsbewegungen kein Fett oder Schmiermittel von der Drehgelenkkupplung in Richtung des kleinen Bundes gelangen kann.

Eine vorteilhafte Weiterbildung besteht darin, dass die Lippendichtung sich endseitig verjüngend und federnd an der Welle anliegend ausgebildet ist, z. B. so, dass Außendruck die Dichtwirkung verstärkt. Mit einer solchen Ausbildung kann Innendruck aus dem gekapselten Bereich durch Auffedern problemlos entweichen, während Schmutz und Staub nicht eintreten kann. Die Lippendichtung muss dabei eine genau austarierte Vorspannung haben, um eine "Atmung" zwischen gekapseltem Bereich und Außenumgebung zu zulassen aber auch die dichtende Funktion
sicherzustellen. Dabei ermöglichen natürlich gerade die verlaufenden Innen-Nuten oder "Rillen" im Zusammenwirken mit der Lippendichtung die Be- und Entlüftung des Lagersitzes.

In diesem Sinne besteht ein weitere vorteilhafte Ausbildung darin, dass die Innen-Nuten axial bzw. parallel zur Wellenache ausgerichtet sind. Dadurch wird eine sichere Be- und Entlüftung des gekapselten Bereiches erreicht, gerade bei starken Hubbewegungen des Manschettenbalges. Dies wird noch durch eine Ausbildung verstärkt, bei der in vorteilhafter Weise die Innen-Nuten endseitig bis in den Dichtlippenbereich reichend ausgebildet sind.

Eine weitere vorteilhafte Ausbildung im Sinne einer einfachen Herstellbarkeit besteht darin, dass die sägezahnförmigen Vorsprünge oder Rippen rechtwinklig zur Wellenachse ausgerichtet sind.

Eine weitere vorteilhafte Ausbildung besteht darin, dass die sägezahnförmigen Vorsprünge oder Rippen quer zu ihrem Verlauf, d.h. bei senkrecht zur Wellenachse verlaufenden Vorsprüngen oder Rippen quer zur Umfangsrichtung, unterbrochen ausgebildet sind und die Unterbrechungen zweier nebeneinander liegender Vorsprünge oder Rippen versetzt zueinander angeordnet sind. Damit entsteht ein Labyrinth, durch welches auch bei Rotationsbewegungen kein Fett in Richtung Manschettenende austreten kann.

Eine weitere vorteilhafte Ausbildung besteht darin, dass die sägezahnförmigen Vorsprünge oder Rippen zur Kupplungsseite weisend ausgebildet sind, ggf. auch geneigt ausgebildet sind. Das unterstützt die dichtende und das Fett zurückweisende Wirkung.

Einer guten Entformbarkeit bei der Herstellung durch ein Spritzgießverfahren dient eine weitere vorteilhafte Ausbildung, die darin besteht, dass die kupplungsseitig Flanke der sägezahnförmigen Vorsprünge oder Rippen in einem Winkel von 75 bis 95° gegenüber der Wellenachse geneigte ist und die endseitige Flanke in einem Winkel von 110 bis 140°.

Diesbezüglich hat sich in praktischen Versuchen eine vorteilhafte Ausbildung herausgestellt, die darin besteht, dass die kupplungsseitig Flanke in einem Winkel von 86° gegenüber der Wellenachse geneigte ist und die endseitige Flanke in einem Winkel von 135°. Damit läss sich das Innenwerkzeug beim Spritzgießen leicht und sicher entfernen.

Die erfindungsgemäße Ausbildung der Labyrinth-Dichtung ist entscheidend dafür, dass Schmierfett vom Sitz der Drehgelenkkupplung, welches aufgrund der Hub- und
der Rotationsbewegung zur Lippendichtung gelangen könnte, zurück gehalten wird.

Die Neigung und/oder winklige Flankenausrichtung der sägezahnförmigen Vorsprünge oder Rippen ermöglicht eine leichtere und deformationsfreiere Entformung aus einem Spritzgießwerkzeug. Eine solche Ausbildung ermöglicht weiter, dass die Zahnform in Bezug auf den Prozess des Spritzgießens besser ausgelegt sind und einen einfachen und kostengünstigen Aufbau der Spritzgießformen ermöglicht.

Eine weitere vorteilhafte Ausbildung besteht darin, dass die Dichtmanschette an dem im Durchmesser größeren Ende am Außenumfang des Gelenkaußenteil eingebördelt ist und an dem im Durchmesser kleineren Ende mit einem im ersten Abschnitt von außen aufgesetzten Spannring auf der Welle aufgeklemmt ist. Dadurch erhält man eine sichere Befestigung an beiden Enden, wobei insbesondere das im Durchmesser kleinere Ende mit einfachen Spannmitteln sicher befestigt ist und trotzdem durch die Längsrillen seine Entlüftungsfähigkeit behält.

Insgesamt weist die erfindungsgemäße Lösung dadurch Vorteile auf, dass eine integrierte Labyrinth-Dichtung vorhanden ist, durch die ein Austritt von Schmierfett verhindert wird, dass durch die Be- und Entlüftung mittels Innen-Nuten und Lippendichtung dünnere Wanddicken realisiert werden können, dass ein geringeres Artikelgewicht vorhanden ist und geringere Kosten bei der Herstellung entstehen und dass keine Aufbläh-Verformungen des Rollbalges bei Hub- und Winkelbewegungen entstehen. Durch die Belüftung und Entlüftung wird weiterhin ein Kontakt zu anderen Bauteilen und damit Abrieb vermieden, wodurch die Lebensdauer deutlich steigt.

Anhand eines Ausführungsbeispiels soll die Erfindung näher erläutert werden. Es zeigen
- Fig. 1: eine erfindungsgemäße Dichtungsmanschette
- Fig. 2: einen vergrößerten Ausschnitt des im Durchmesser kleineren Endes der Dichtungsmanschette nach Fig. 1
- Fig. 2a: einen weiter vergrößerten Ausschnitt der Fig. 2 mit eingezeichneten Flankenwinkeln der sägezahnförmigen Vorsprünge oder Rippen
- Fig. 3: eine Drehgelenkkupplung und eine erfindungsgemäße Dichtungsmanschette jeweils separat vor ihrem Zusammenbau
- Fig. 4: eine Drehgelenkkupplung mit eingebauter erfindungsgemäßer Dichtungsmanschette

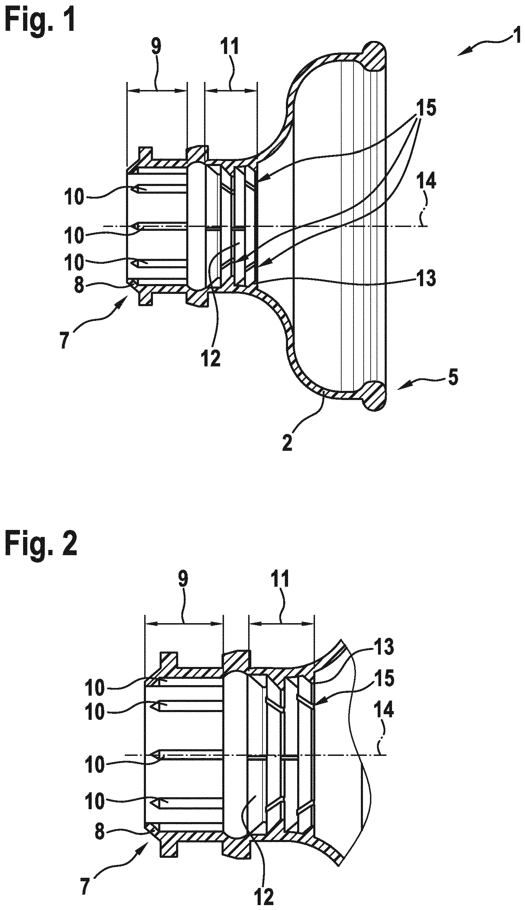

Die Fig. 1 zeigt eine erfindungsgemäße Dichtungsmanschette 1 in Form eines hub- und winkelbeweglichen Rollbalg 2 zur Abdichtung einer Drehgelenkkupplung 3 einer rotierenden Welle 4, wobei die Dichtungsmanschette 1 mit ihrem im Durchmesser größeren Ende 5 mit dem Gelenkaußenteil 6 und mit dem im Durchmesser kleineren Ende 7 mit der Welle 4 dichtend verbunden ist. Drehgelenkkupplung 3, Welle 4 und Gelenkaußenteil 6 sind in der Zusammenschau der Fig. 1 bis 4 erkennbar.

Die u.a. in der Fig. 1 gezeigte Dichtungsmanschette 1 weist an dem im Durchmesser kleineren Ende 7 und ausgehend von diesem Ende folgende Einrichtungen auf:
- eine am Wellenumfang anliegende Lippendichtung 8,
- einen sich an die Lippendichtung 8 kupplungsseitig anschließenden, an der Welle anliegenden ersten Abschnitt 9, der mit über den Innenumfang verteilt angeordneten und zur Welle 4 geöffneten Innen-Nuten 10 versehen ist, sowie
- einen sich an den ersten Abschnitt 9 kupplungsseitig anschließenden zweiten Abschnitt 11, der an seinem Innenumfang umlaufende und zur Welle 4 ausgerichtete sägezahnförmige Vorsprünge oder Rippen 12 aufweist, deren Spitzen 13 an der Wellenaußenseite bzw. am Wellenumfang anliegen.

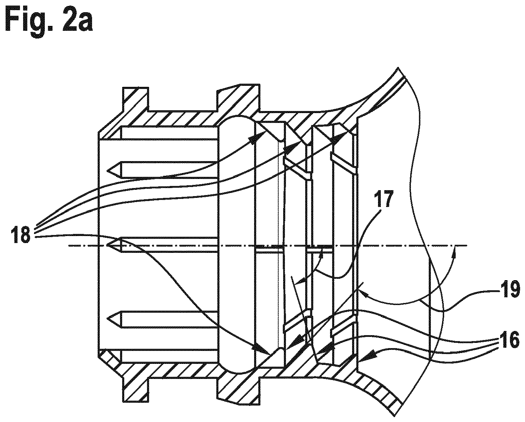

Wie in den Fig. 1 und 2 deutlich zu sehen, verjüngt sich die Lippendichtung 8 endseitig und liegt federnd an der Welle 4 an Die Innen-Nuten 10 sind axial bzw. parallel Manschettenachse bzw. zur Wellenache 14 ausgerichtet und bis in den Dichtlippenbereich reichend ausgebildet.

Die sägezahnförmigen Vorsprünge oder Rippen 12 sind rechtwinklig zur Wellenachse 14 ausgerichtet und quer zu ihrem Verlauf, also hier quer zur Umfangsrichtung, unterbrochen ausgebildet, wobei die Unterbrechungen 15 zweier nebeneinander liegender Vorsprünge oder Rippen versetzt zueinander angeordnet sind.

Zudem sind, wie die Fig. 2a zeigt, die sägezahnförmigen Vorsprünge oder Rippen 12 zur Kupplungsseite weisend ausgebildet und besitzen eine kupplungsseitig Flanke 16, die in einem Winkel 17 von 86° gegenüber der Wellenachse 14 geneigte ist, während die endseitige Flanke 18 in einem Winkel 19 von 135° gegenüber der Wellenachse 14 geneigt ist.

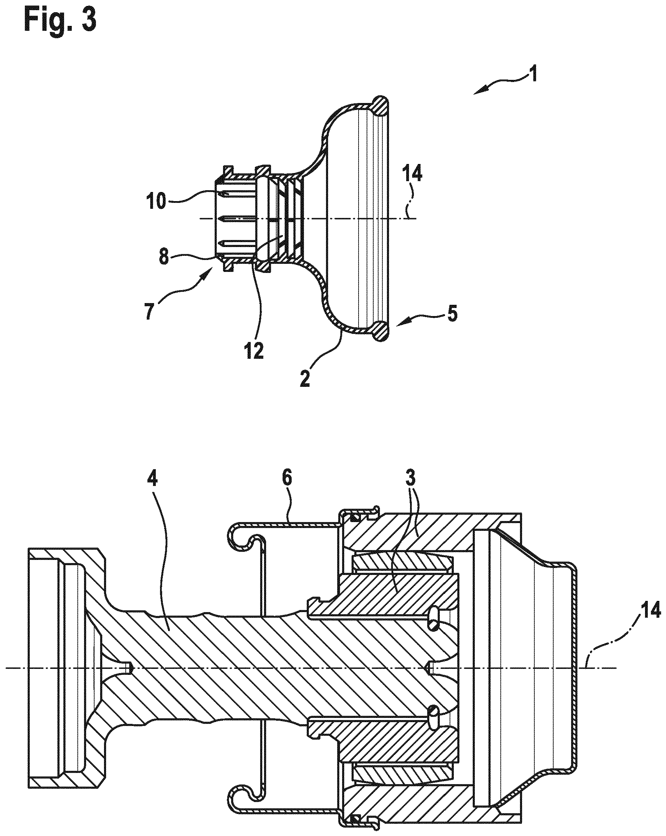

Fig. 3 zeigt eine Drehgelenkkupplung und eine erfindungsgemäße Dichtungsmanschette zur Verdeutlichung jeweils separat vor ihrem Zusammenbau, nämlich in ihrem unteren Teil eine Drehgelenkkupplung 3 mit einer Welle 4 und einem Gelenkaußenteil 6 ohne eingesetzte Dichtungsmanschette 1 und in ihrem oberen Teil die zugehörige Dichtungsmanschette 1.

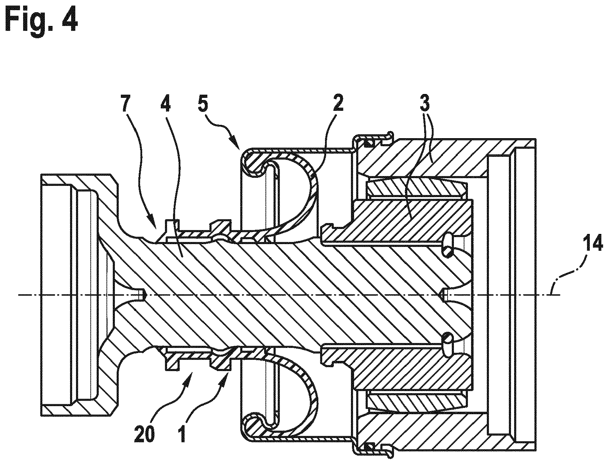

Fig. 4 zeigt eine Drehgelenkkupplung mit eingesetzter erfindungsgemäße Dichtungsmanschette 1, wobei die Dichtungsmanschette zum Einbau umgestülpt und an ihrem im Durchmesser größeren Ende 5 am Außenumfang des Gelenkaußenteils 6 eingebördelt ist und an ihrem im Durchmesser kleineren Ende 7 mit einer im ersten Abschnitt 9 ausgebildeten Spannringnut 20 für einen von außen aufgesetzten, hier nicht näher dargestellten Spannring auf der Welle 4 aufgeklemmt

### Bezugszeichenliste

### (Teil der Beschreibung)

- 1: Dichtungsmanschette
- 2: Rollbalg
- 3: Drehgelenkkupplung
- 4: Welle
- 5: im Durchmesser größeres Ende der Dichtungsmanschette
- 6: Gelenkaußenteil
- 7: im Durchmesser kleineres Ende der Dichtungsmanschette
- 8: Lippendichtung
- 9: Erster Abschnitt
- 10: Innen-Nut
- 11: Zweiter Abschnitt
- 12: Vorsprung oder Rippe
- 13: Spitze des Vorsprungs oder der Rippe
- 14: Wellenachse
- 15: Unterbrechung des Vorsprungs oder der Rippe
- 16: Kupplungsseitige Flanke
- 17: Winkel der Kupplungsseitigen Flanke
- 18: Endseitige Flanke
- 19: Winkel der endseitigen Flanke
- 20: Spannringnut

## Patentansprüche

1. Dichtungsmanschette (1) in Form eines hub- und winkelbeweglichen Rollbalgs (2) zur Abdichtung von Drehgelenkkupplungen (3) rotierender Wellen (4), wobei die Dichtungsmanschette (1) mit ihrem im Durchmesser größeren Ende (5) mit dem Gelenkaußenteil (6) und mit dem im Durchmesser kleineren Ende (7) mit der Welle (4) dichtend verbunden ist, **dadurch gekennzeichnet, dass** die Dichtungsmanschette (1) an dem im Durchmesser kleineren Ende (7) und ausgehend von diesem Ende folgende Einrichtungen aufweist
a) eine am Wellenumfang anliegende Lippendichtung (8),
b) einen sich an die Lippendichtung (8) kupplungsseitig anschließenden, an der Welle (4) anliegenden ersten Abschnitt (9), der mit über den Innenumfang verteilt angeordneten und zur Welle geöffneten Innen-Nuten (10) versehen ist, wobei die die Innen-Nuten (10) axial bzw. parallel zur Wellenachse (14) ausgerichtet sind,
c) einen sich an den ersten Abschnitt (9) kupplungsseitig anschließenden zweiten Abschnitt (11), der an seinem Innenumfang umlaufende und zur Welle ausgerichtete sägezahnförmige Vorsprünge oder Rippen (12) aufweist, deren Spitzen (13) an der Wellenaußenseite anliegen, wobei die sägezahnförmigen Vorsprünge oder Rippen (12) rechtwinklig zur Wellenachse (14) ausgerichtet sind.

2. Dichtungsmanschette nach Anspruch 1, bei der die Lippendichtung (8) sich endseitig verjüngend und federnd an der Welle (4) anliegend ausgebildet ist.

3. Dichtungsmanschette nach einem der Ansprüche 1 bis 2, bei der die Innen-Nuten (10) endseitig bis in den Dichtlippenbereich reichend ausgebildet sind.

4. Dichtungsmanschette nach einem der Ansprüche 1 bis 3, bei der die sägezahnförmigen Vorsprünge oder Rippen (12) quer zu ihrem Verlauf unterbrochen ausgebildet sind und die Unterbrechungen (15) zweier nebeneinander liegender Vorsprünge oder Rippen (12) versetzt zueinander angeordnet sind.

5. Dichtungsmanschette nach einem der Ansprüche 1 bis 4, bei der die sägezahnförmigen Vorsprünge oder Rippen (12) zur Kupplungsseite weisend ausgebildet sind.

6. Dichtungsmanschette nach Anspruch 5, bei der die kupplungsseitig Flanke (16) der sägezahnförmigen Vorsprünge oder Rippen (12) in einem Winkel (17) von 75 bis 95° gegenüber der Wellenachse geneigt ist und die endseitige Flanke (18) in einem Winkel (19) von 110 bis 140°.

7. Dichtungsmanschette nach Anspruch 6, bei der die kupplungsseitig Flanke (16) in einem Winkel (17) von 86° gegenüber der Wellenachse geneigte ist und die endseitige Flanke (18) in einem Winkel (19) von 135°.

8. Dichtungsmanschette nach einem der Ansprüche 1 bis 7, die an dem im Durchmesser größeren Ende (5) am Außenumfang des Gelenkaußenteil (6) eingebördelt ist und an dem im Durchmesser kleineren Ende (7) mit einem im ersten Abschnitt (9) von außen in eine Spanringnut (20) eingesetzten Spannring auf der Welle aufgeklemmt ist.

## Claims

1. Sealing sleeve (1) in the form of a rolling bellows (2) which can be moved in a lifting and angular manner for sealing rotary joint couplings (3) of rotating shafts (4), wherein the sealing sleeve (1) is connected in a sealing manner to the outer joint member (6) with the end (5) thereof having the larger diameter and is connected in a sealing manner to the shaft (4) with the end (7) having the smaller diameter, **characterized in that** the sealing sleeve (1) has at the end (7) having the smaller diameter and starting from this end the following devices:
a) a lip seal (8) which adjoins the periphery of the shaft,
b) a first portion (9) which adjoins the lip seal (8) at the coupling side and which adjoins the shaft (4) and which is provided with inner grooves (10) which are arranged so as to be distributed over the inner periphery and which are open in the direction toward the shaft, wherein the inner grooves (10) are orientated axially or parallel with respect to the shaft axis (14),
c) a second portion (11) which adjoins the first portion (9) at the coupling side, and which has saw-tooth-like projections or ribs (12) which extend on the inner periphery thereof and which are orientated toward the shaft and whose tips (13) adjoin the outer side of the shaft, wherein the saw-tooth-like projections or ribs (12) are orientated at right-angles with respect to the shaft axis (14).

2. Sealing sleeve according to Claim 1, wherein the lip seal (8) is constructed so as to taper at the end side and to be in resilient abutment with the shaft (4).

3. Sealing sleeve according to one of Claims 1 to 2, wherein the inner grooves (10) are constructed at the end side so as to extend into the sealing lip region.

4. Sealing sleeve according to one of Claims 1 to 3, wherein the saw-tooth-like projections or ribs (12) are constructed so as to be interrupted transversely relative to their path, and the interruptions (15) of two projections or ribs (12) which are located beside each other are arranged offset with respect to each other.

5. Sealing sleeve according to one of Claims 1 to 4, wherein the saw-tooth-like projections or ribs (12) are constructed so as to face the coupling side.

6. Sealing sleeve according to Claim 5, wherein the coupling-side flank (16) of the saw-tooth-like projections or ribs (12) is inclined at an angle (17) of from 75 to 95° with respect to the shaft axis and the end-side flank (18) is inclined at an angle (19) of from 110 to 140°.

7. Sealing sleeve according to Claim 6, wherein the coupling-side flank (16) is inclined at an angle (17) of 86° with respect to the shaft axis and the end-side flank (18) is inclined at an angle (19) of 135°.

8. Sealing sleeve according to one of Claims 1 to 7, which is flanged to the outer periphery of the outer joint member (6) at the end (5) having the larger diameter and, at the end (7) having the smaller diameter, is clamped on the shaft with a clamping ring which is placed into a clamping ring groove (20) in the first portion (9) from the outer side.

## Revendications

1. Garniture d'étanchéité (1) sous la forme d'un soufflet roulant (2) à mouvement de levage et mouvement angulaire pour l'étanchéité d'accouplements articulés rotatifs (3) d'arbres rotatifs (4), la garniture d'étanchéité (1) étant connectée hermétiquement par son extrémité de plus grand diamètre (5) à la partie extérieure d'articulation (6) et par son extrémité de plus petit diamètre (7) à l'arbre (4), **caractérisée en ce que** la garniture d'étanchéité (1) présente, au niveau de l'extrémité de plus petit diamètre (7) et à partir de cette extrémité, les dispositifs suivantes :
a) un joint à lèvre (8) s'appliquant sur la périphérie de l'arbre,
b) une première portion (9) se raccordant du côté de l'accouplement au joint à lèvre (8), s'appliquant contre l'arbre (4), qui est pourvue de rainures intérieures (10) disposées de manière répartie sur la périphérie intérieure et ouvertes vers l'arbre, les rainures intérieures (10) étant orientées axialement ou parallèlement à l'axe de l'arbre (14),
c) une deuxième portion (11) se raccordant du côté de l'accouplement à la première portion (9), qui présente des saillies ou des nervures (12) en forme de dents de scie s'étendant sur la périphérie au niveau de sa périphérie intérieure et orientées vers l'arbre, dont les pointes (13) s'appliquent contre le côté extérieur de l'arbre, les saillies ou les nervures (12) en forme de dents de scie étant orientées à angle droit par rapport à l'axe de l'arbre (14).

2. Garniture d'étanchéité selon la revendication 1, dans laquelle le joint à lèvre (8) est réalisé de manière à se rétrécir du côté de l'extrémité et à s'appliquer de manière élastique contre l'arbre (4).

3. Garniture d'étanchéité selon l'une quelconque des revendications 1 à 2, dans laquelle les rainures intérieures (10) sont réalisées de manière à s'étendre du côté de l'extrémité jusque dans la région du joint à lèvre.

4. Garniture d'étanchéité selon l'une quelconque des revendications 1 à 3, dans laquelle les saillies ou les nervures (12) en forme de dents de scie sont réalisées de manière interrompue transversalement à leur étendue et les interruptions (15) de deux saillies ou nervures (12) adjacentes sont disposées de manière décalée les unes par rapport aux autres.

5. Garniture d'étanchéité selon l'une quelconque des revendications 1 à 4, dans laquelle les saillies ou les nervures (12) en forme de dents de scie sont réalisées de manière tournée vers le côté de l'accouplement.

6. Garniture d'étanchéité selon la revendication 5, dans laquelle le flanc (16) du côté de l'accouplement des saillies ou des nervures (12) en forme de dents de scie est incliné suivant un angle (17) de 75 à 95° par rapport à l'axe de l'arbre et le flanc (18) du côté de l'extrémité est incliné suivant un angle (19) de 110 à 140°.

7. Garniture d'étanchéité selon la revendication 6, dans laquelle le flanc (16) du côté de l'accouplement est incliné suivant un angle (17) de 86° par rapport à l'axe de l'arbre et le flanc (18) du côté de l'extrémité est incliné suivant un angle (19) de 135°.

8. Garniture d'étanchéité selon l'une quelconque des revendications 1 à 7, qui est sertie au niveau de l'extrémité de plus grand diamètre (5) au niveau de la périphérie extérieure de la partie extérieure d'articulation (6) et qui est serrée sur l'arbre au niveau de l'extrémité de plus petit diamètre (7) avec une bague de serrage insérée dans la première portion (9) depuis l'extérieur dans une rainure de bague de serrage (20).
